# EUROPEAN PATENT SPECIFICATION

(11) **EP 1 521 217 B1**
(45) Date of publication and mention of the grant of the patent: **15.02.2012**
(21) Application number: 04021045.2
(22) Date of filing: 03.09.2004
(51) Int. Cl.: G06Q 20/00, G07B 17/00

(54) **Payment release system**
Zahlungsbewilligungssystem
Systèm d'autorisation paiement

(30) Priority: 05.09.2003 US 656354
(43) Date of publication of application: 06.04.2005
(73) Proprietor: Pitney Bowes Inc., Stamford, CT 06926-0700 (US)
(72) Inventor: Monsen, Erik, D., N., Arlington VA 22202 (US); Ketan, Anuja, S., Oxford CT 06478 (US); Heiden, Richard, W., Huntington CT 06484 (US); Sansone, Ronald, P., Weston CT 06883 (US)
(74) Representative: HOFFMANN EITLE

(56) References cited:
- US-A1- 2002 026 430
- US-B1- 6 381 582
- US-B1- 6 415 265
- US-B1- 6 529 885

## Description

This invention relates generally to delivery of items in conjunction with a payment release system to facilitate transactions between a buyer and a seller that occur over a network. More particularly, this invention relates to a secure payment system for a network transaction that permits withholding payment until the goods are delivered to the buyer.

Currently, the buyer in a remote, or non face-to-face, transaction, such as those that occur over a network, such as the Internet, is at the mercy of the seller to deliver the goods after a payment has been made by the buyer.

For example, during an electronic transaction, such as an Internet auction or other e-commerce transaction, the buyer and the seller transact business over a network. (Such transactions are characterized by features such as long distance between buyer and seller, no previous dealing between buyer and seller and no personal meeting to exchange payment for the goods and reception of the goods.) Thus, for example, when an on-line auction is complete, the party with the winning bid pays for the item and the seller ships the item to the auction "winner". In some instances, the seller delays shipping for some time or fails to ship due to fraud or negligence. In such an instance, the buyer may be without recourse since payment was released prior to receiving the goods. Oftentimes, it is very difficult for the buyer to locate the seller, since the two parties may have only limited information about each other.

Another possible scenario is that the seller, through oversight or negligence or fraud, ships the wrong goods to the buyer. In either case the buyer is at a loss.

U.S. Patent Number 6,529,885, issued to Johnson, entitled, "Methods and systems for carrying out directory-authenticated electronic transactions including contingency-dependent payments via secure electronic bank drafts" relates to a computer-implemented method and system for securely carrying out electronic transactions including electronic drafts, wherein payment on at least one of the drafts is contingent upon the removal of an associated contingency. The method may include steps of establishing a secure computer site accessible only by authenticated parties to the transaction and by any authenticated contingency approver. The site includes a representation of the transaction that includes a representation of each of the plurality of drafts and an option to remove any contingencies associated therewith. Parties and contingency approvers requesting access to the computer site are authenticated by encrypting identification information provided by the requesting party or contingency approver over a secure channel and successfully matching the encrypted identification information with an encrypted identifier that is stored by a bank, the encrypted identifier being unique to the requesting party or contingency approver. Payment on the constituent drafts of the transaction are released by the bank only when the option to remove each contingency associated with the draft is timely exercised by an authenticated party or authenticated contingency remover that is authorized to remove the contingency.

U.S. Patent Number 6,520,409, issued to Mori et al., entitled, "Electronic transaction method and system" relates to a server system that stores a plurality of electronic transaction procedures corresponding to elements or combinations thereof including means of payment settlement of a purchased commodity, amount of deal, contents of the purchased commodity, financial institutions for making the settlement and so on. The server system selects one of the electronic transaction procedures corresponding to elements or a combination thereof, including means of payment settlement of a commodity to be purchased when a purchase-side client system requests a seller to sell the commodity. The electronic transaction procedure is distributed to the offer-side client, the purchase-side client and the settlement-side client through a communication network. Each of the offer-side client, the purchase-side client and the settlement-side client executes electronic transaction processes according to the distributed electronic transaction procedure. Either all of the selected electronic transaction procedure is distributed from the server system to the client systems at a time or parts of the electronic transaction procedure are successively distributed to the client systems from the server system.

U.S. Patent No. 6,381,582, issued to Walker et al., entitled, "Method and system for processing payments for remotely purchased goods" relates to a system and method whereby goods can be purchased from a remote seller such as a catalog marketer, and paid for at a local register, such as that of a local retailer. A point-of-sale system operable by a local seller processes, in a user-friendly manner, purchase codes identifying remote sellers to enable transactions including payments for both local and remotely purchased goods. A processor operable by a remote seller generates data for use by the local seller in receiving and processing a payment for goods purchased from the remote seller. A processor operable by a processing merchant permits the processing merchant to facilitate the remote sales and local payments, reconciling the related transactions occurring at the remote seller and the local seller. Further provided is a process for use by a customer enabling remote purchase of goods with subsequent local payment at a convenient location.

Reference is also directed to US 2002/026430 A1. This discloses a mail piece verification system for processing mail pieces having associated therewith respective mail piece data. The system includes a plurality of postage metering systems for preparing mail pieces, a plurality of mail processing centers for receiving mail pieces and obtaining the respective mail piece data and a data center means in operative communication with the plurality of postage metering systems and the plurality of mail processing centers, the data center means including a plurality of account files corresponding to the plurality of postage metering systems. The data center means stores reset data in each of the plurality of account files representative of reset activity associated with the plurality of postage metering systems, respectively, receives respective mail piece data corresponding to the mail pieces from the plurality of mail processing centers, uses the respective mail piece data, storing empirical data in each of the plurality of account files representative of mailing activity associated with the plurality of postage metering systems, respectively, and conducts a forensic accounting analysis of the empirical data and the reset data associated with a selected postage metering system.

US 6,415,265 discloses a server system for multi-level vending of any electronically transferable product through a communications network directly to a customer's computer. This server system (called a Sales Support Server) integrates the collection of a payment via the network and the automatic distribution of the product with the calculation of commissions using a multi-level marketing commission structure and the distribution of commissions and fees via the network. The preferred configuration includes a client application (called a Sales App) which runs as a plug-in to a network browser on the customer's computer and which provides a purchase request and registration data to a Sales Support Server and performs the installation of the product on the customer's computer. The Sales Support Server acquires the payment, transfers the product, calculates and pays the commissions, and adds the purchaser's registration information to the multi-level sales database for the product. The usefulness of this system includes physical product distribution through a shipping and handling system.

According to the present invention, there is provided apparatus for authorizing payment upon delivery of an item as set out in Claim 1.

The present invention also provides a method as set out in Claim 5.

Optional features are set out in the other claims.

An embodiment ensures that a buyer will only be charged when the item is delivered to the buyer.

Embodiments are described with reference to the drawings in which:
Figure 1 shows a diagram of a network in an embodiment;
Figures 2A and 2B show a flow chart of steps for an electronic auction embodiment of the present invention; and
Figure 3 shows postal tracking and identifier dispensing of an embodiment.

The following describes a method for authorizing payment upon delivery of an item. The method includes registering each one of a plurality of receiving parties with a transaction module and registering each one of a plurality of sending parties with the transaction module. An identifier is generated and associated with a particular sending party and a particular item. Data is stored that relates the identifier and the particular sending party in the transaction module. The item is transported to a destination location specified by the receiving party where identifier data is retrieved. Next a correlation is made between the identifier data and a sending party. A debit is authorized from a selected receiving party's account.

The identifier is generated from an open system postage meter.

In a further development, the receiving party may be notified that the debit has occurred.

Furthermore, the sending party may be notified that the debit has occurred.

The transaction module is maintained by a third party.

The following also describes an apparatus for authorizing payment for an article. The apparatus includes a transaction facility that is adapted to store data relating to a plurality of articles, data relating to first party information and data relating to second party information. The transaction facility is adapted to generate an identifier associated with a particular article. The transaction facility is adapted to receive delivery information and to authorize a transaction between an account of the first party and an account of the second party.

The present embodiment is a payment release system, which is used in "open" postage meter systems. (An open postage meter system is a system in which the postal security device, or PSD, is located remotely from the user and is accessed through a network connection. Such open meter systems are the CLICKSTAMP ONLINE^{™} product available from Pitney Bowes Inc., Stamford, Connecticut, USA. A closed postage meter system is, for example, a system in which the PSD is located in the mailing machine or meter. Such closed postage meter systems are the DM series^{™} of meter, PARAGON^{™} meter and other meters in which the PSD is mounted within the machine).

Use of the present payment release system reduces the risk of loss of funds during an electronic transaction, such as an Internet auction or other e-commerce transaction in which the buyer and the seller transact business over a network. When an on-line auction is complete, the party with the winning bid pays for the item and the seller ships the item to the auction "winner". In some instances, the seller delays shipping for some time or fails to ship due to fraud or negligence. In such an instance, the buyer may be without recourse since payment was released. Another possible scenario is that the seller, through oversight or negligence or fraud, ships the wrong goods to the buyer. In either case the buyer is at a loss.

The embodiment allows the buyer, whose payment is typically handled by a third party payment system, to withhold payment to the seller until the item has been tracked by a delivery system to ensure delivery to the buyer. For example, the United States Postal Service Confirm^{™} system may be used to detect delivery of the item. Once delivery has occurred, funds may be released to the seller.

The embodiment is used to generate a label, or postal indicia, which is affixed to an item or article, which has identification information thereon. The identification information may be printed as an encoded or encrypted tag, may be printed with fluorescent ink, which is only visible when viewed with light having a particular wavelength, printed with a watermark, printed as a bar code representation, printed as part of a postal indicia, or IBIP (Information Based Indicia Program) indicia or other technique that identifies the item or article. The label may typically be affixed to an item or article, such as a parcel, package, letter, postcard, mailpiece, envelope, business reply envelope, or the like. This may be accomplished at the transaction module, which may include a postage meter.

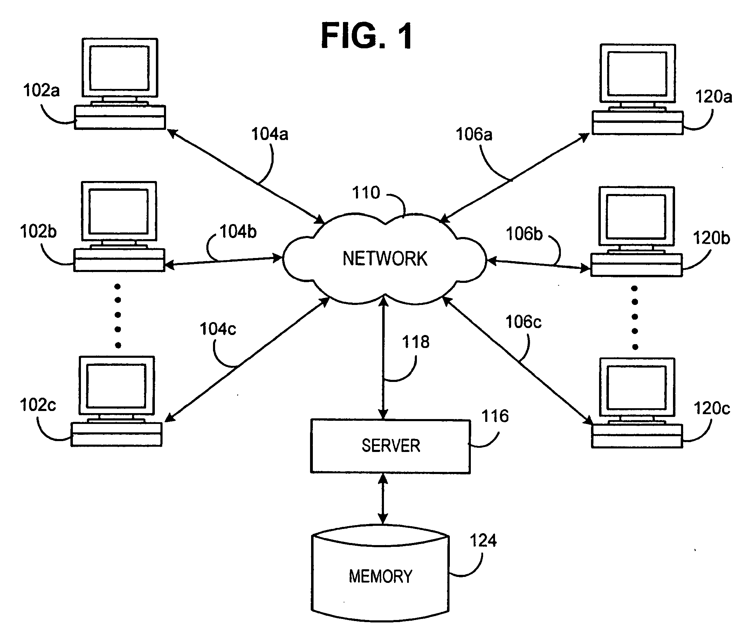

Figure 1 shows a diagram of a network in an embodiment. The system 10 includes a plurality of first party client information appliances 102(a)...(n), where n is any number, network 110, third party server 116, and a plurality of second party information appliances 120(a)...(n), where n is any number.

The individual client information appliances, generally, 102 may include, for example, PC's, portable PC's with docking nodes, web TV's, cable system set top boxes, handheld personal digital assistants with wireless capability, cellular phones, pagers, and the like. Information appliances 102 can access an Internet service provider (ISP) directly, or via a network connection, which can be telephone, cable, or other wireless systems. In general, the teaching of this embodiment may be employed in conjunction with any suitable type of information appliance device 102 that is capable of communicating with other components of a communication system/network, and that includes one or more user interfaces for enabling a user to input information, view or otherwise perceive presented (*e.g.*, displayed) information, and select or otherwise manipulate such presented information.

For purposes of discussion, the first party information appliances 102 are typically associated with a buyer, such as an individual or company who is purchasing goods over network 110 from a second party (typically a seller) located at second party information appliance 120 (a)...(n).

As described above, each of first party information appliances, or modules, 102(a) ...102(n) (where n may be any number) may be, for example, a commercially available general purpose computer such as a windows-type or Maclntosh-type computer, equipped with a desktop browser that enables the user to interface with network 110 and second party information appliances 120(a)...(n), where n is any number. Each buyer, or first party, information appliance 102 has an associated communications link 104 to connect the first party information appliance 102 with an associated Internet Service Provider (ISP), or Internet Access Provider (IAP) and to network 110. An ISP is typically a company providing access to the Internet, generally for a monthly fee. Some of the largest ISPs, including AOL and CompuServe, provide users with their proprietary browsers.

Alternatively, a local area network (LAN), local exchange carrier (LEC), Digital Subscriber Line (DSL) or Integrated Services Digital Network (ISDN), or cable, or a wireless or other format of data exchange could be used to connect the first party information appliance to the network 110.

Second party, or seller, information appliances, or modules, 120 may include, for example, PC's, portable PC's with docking nodes, web TV's, cable system set top boxes, handheld personal digital assistants with wireless capability, cellular phones, pages, and the like. Information appliances 120 can access network 110 via Internet service provider (ISP) directly, or via a network connection, shown generally as 106, which can be telephone, cable, or other wireless systems. Seller information appliances 120 are used to provide content data that relates to the sale of goods, for example an on-line auction website such as e-Bay, or a similar vending website. Alternatively, the seller information appliance may be a business or individual who desires to sell items over the network 110. The seller information appliances also have access, via an electronic interconnection (not shown) to a meter or Postal Security Device (PSD). This connection to a PSD is an open system as described herein.

In an open metering embodiment, the seller information appliance 120 is used in conjunction with a printer and a remote PSD, which enables the seller information appliance to generate a valid United States Postal Service (USPS) indicia that can be printed on an envelope or printed on a label and affixed to a package, parcel or other mailpiece.

Network 110 is any network of inter-connectable computers. In the present embodiment, network 110 preferably is the Internet with World-Wide-Web capabilities. The World-Wide-Web provides access to Internet information and services by using hypertext to organize, search and present information to a user.

Third party server, or transaction server, or transaction module, 116 is connected to the Internet 110, typically via an Internet Service Provider (ISP) and communication link, shown generally as 118. The transaction server 116 is for example, a computer or group of computers that facilitate the transmission, storage, and reception of such information and other data between different points, such as between components, and between external sources/destinations.

The third party server 116 is used to store user account information, such as buyer and seller party data, as well as data relating to a parcel, package or mailpiece with an indicia or label that has identifier data. The account information is typically stored in memory 124 and is may include balance information relating to user funds that a user has deposited, a credit card account number, debit card account number or billing information to bill a buyer when the parcel, package or mailpiece has been delivered to a destination location, which may be a buyer's address or other location designated by a buyer.

From a hardware standpoint, in this disclosure a server computer, such as server 116, will typically include one or more components, such as one or more microprocessors (also referred to as "controllers") (not shown), for performing the arithmetic and/or logical operations required for program execution. A server computer will also typically include disk storage media 124 (also referred to as a "memory"), such as one or more disk drives for program and data storage, and a random access memory, for temporary data and program instruction storage (not shown).

From a software standpoint, a server computer also contains server software (not shown) resident on the disk storage media 124, which, when executed, directs the server computer in performing its data transmission and reception functions. The server software runs on an operating system, for example Windows 2000 Advanced Server^{™} (Microsoft Corporation, Redmond Washington), which is also stored on the disk storage media. Server computers are offered by a variety of hardware vendors, can run different operating systems, and can contain different types of server software, each type devoted to a different function, such as handling and managing data from a particular source, or transforming data from one format into another format.

The server 116 and the associated memories, collectively referred to as 124, store various operating programs and routines for controlling server operations. In a preferred embodiment, one of the programs stored in memory 124 is web server software, preferably Microsoft internet information Server ("IIS") (or later versions thereof), running on a Windows platform. Also in the preferred embodiment, another program stored in the memory 124 is Microsoft Exchange 2000 (or later versions thereof).

The web site data, or content data, are delivered across the Internet 110 to users' browser programs. The third party server 116 receives electronic information from client information appliances 102 regarding billing and/or payment information from a user. The purchases are preferably done by a user sending a credit card account number or bank account number, which are typically encrypted prior to transmission, to the third party server 116. Known encryption techniques, such as SSL (secure sockets layer), PGP (pretty good privacy) and Envelop98, can be used to ensure the security of the credit card or bank account information transmitted over network 110.

As will be apparent to those skilled in the art, user information appliance 102 could be connected to other devices such as a printer, other computer, or audio output device, such as a speaker.

Communication links 104, 106 and 118, as described herein may be electrically conductive wires or paths, photoconductive lines, infrared or wireless transmission.

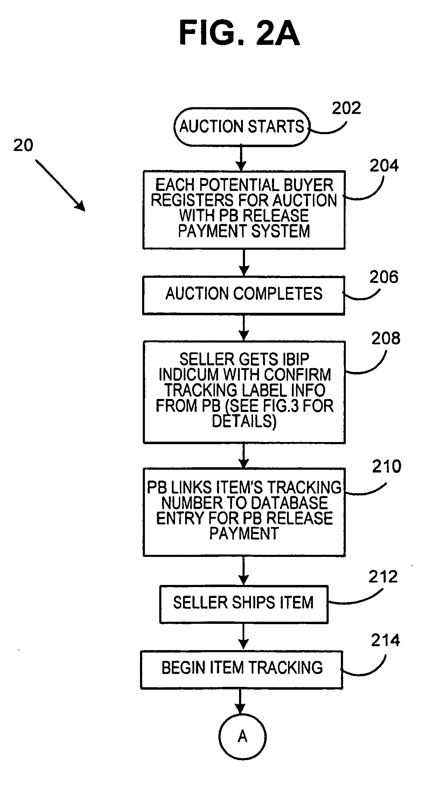

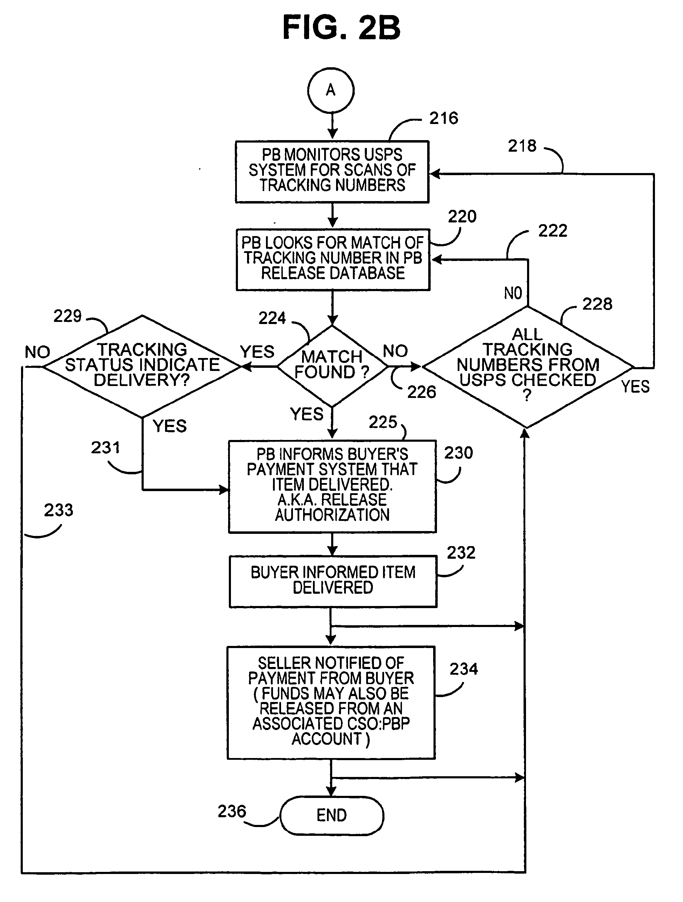

Figures 2A and 2B show a flow chart of steps for an electronic auction embodiment of the present invention. Flow chart 20 is a series of steps to implement the embodiment, which is suitably stored on a computer-readable medium such as a floppy disk or stored in RAM (Random Access Memory) or ROM (Read Only Memory). Block 202 is a start block in which the process begins. As shown in block 202, the process is an auction to sell goods over the internet.

While Figure 2 shows a particular sequence of steps, it is also an embodiment of the present invention that the sequence could be modified. Indeed, the described sequence is not necessarily the only sequence that could be used to implement an embodiment.

Block 204 shows that each potential buyer establishes a user account with a third party provider payment system. This payment release system could be implemented by a party such as the online auction company, a bank, Pitney Bowes, or other third party. The registration may also entail the buyer and the seller providing either credit card information, checking account information, other bank account information or a billing address to a third party so that the third party can send invoices and verify that payment from the buyer has been received.

Block 206 shows that the sale of the goods is completed. In the present example, the sale is in the context of an online auction in which one or more buyers bid on an item offered for sale by the seller. The online auction process may be implemented by a recognized Internet auction company such as e-Bay, or may be a sale between two companies, two individuals or a company and an individual, in which the seller offers an item for sale over the Internet or other network. Alternatively, the offer for sale may be through a newspaper advertisement or other means in which the seller and buyer do not meet "face-to-face" to conduct the transaction.

Block 208 shows that the seller obtains an indicator, for example, an indicia, such as indicia that includes an IBIP (Information Based Indicia Program) indicia with tracking capability. This identifier that has tracking capability is typically either a portion of the indicia or an additional label. The indicator is generated by an open system postage meter.

Block 210 shows that the third party, such as Pitney Bowes, bank or other trusted party links the item purchased by the buyer to the indicator. This step correlates the item and an indicator and is stored in memory.

Block 212 shows that the seller ships the item. The shipping is typically done from a seller's (or shipper's) location or warehouse, or other location where the item is located. Upon shipment the item is typically packaged and the identifier is affixed to the outside of the package, parcel or mailpiece. The seller may use shipping software, such as Deliverability™ available from Pitney Bowes, to select a particular carrier, such software may ascertain the lowest cost carrier service or carriers offering particular features.

Block 214 shows that once the item, package, parcel, or mailpiece (article) is shipped, it may be tracked using the identifier data and scanners at the various intermediate locations from the shipping location to the destination.

Block 216 shows that the third party, such as Pitney Bowes or other third party responsible for releasing payment upon delivery of the article to the destination address, can trace the article by monitoring the progress of the article.

Block 220 shows that the third party monitors the location of the article to determine when there is a match between the item being tracked and tracking data from the carrier, such as USPS.

Decision block 224 determines when a match is found. If a match is found, line 225 leads to block 230 in which the third party informs the buyer's payment system that the article has been delivered and payment to the seller should be released. Also, in an alternate embodiment, "yes" line 227 leads to decision block 229 that determines whether the tracking status indicates delivery. If so, "yes" line 231 leads to block 230. If not, "no" line 233 leads to block 228.

Block 232 shows that the buyer is informed that the article has been delivered and that payment has been authorized to be made to the seller. The buyer, or recipient, (a recipient may be a party who receives the item, but did not necessarily pay for it) may also contact the transaction module to confirm that the parcel or item is the correct item, and is not damaged, i.e., delivery is satisfactory. This feature has the advantage of allowing a recipient to indicate that he did not receive the correct item or that the item has been damaged during shipping. Thus, the recipient may contact the transaction module, via telephone or e-mail, to indicate whether payment should be authorized. This feature also ensures that the item has been delivered to the correct address.

Line 226 from decision block 224 shows that when a match has not been found between the third party's tracking number, or identifier information and tracking information from the carrier, such as the USPS, decision block 228 is reached. Decision block 228 determines whether all tracking numbers have been checked, if not, line 222 leads to block 220. If all numbers have been checked, line 218 leads to block 216.

Block 234 shows that the seller is notified that payment has been released from the buyer. Block 236 is an end block.

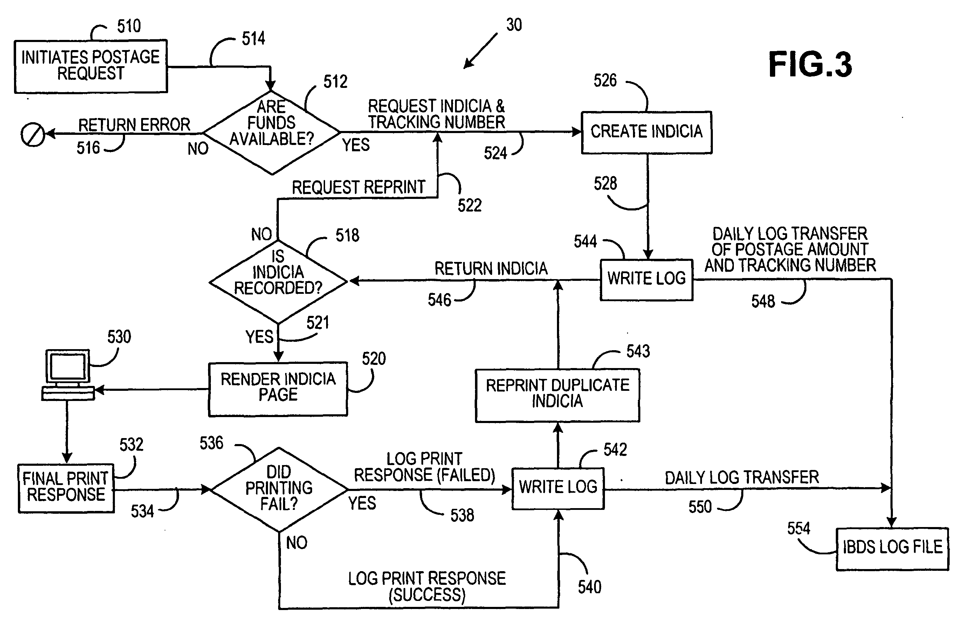

Figure 3 shows a flowchart 30 of steps used for postal tracking and identifier dispensing of an embodiment. This method is suitably stored on a computer-readable medium such as a floppy disk or stored in RAM (Random Access Memory) or ROM (Read Only Memory). This method relates to exception processing for releasing payment for an item. For example, if an item's tracking number (identifier data) is not scanned by the carrier, the buyer and seller need to be notified to resolve delivery. For example, if perhaps the scanning system failed and the item was delivered to the buyer, the buyer's payment system would not be notified to authorize payment to the seller. The method shown in Figure 3 provides a back-up system.

Block 510 shows that a postage request is initiated. This is done at an open metering system. Line 514 leads to decision block 512 in which a determination is made of whether adequate postage funds are available. If not, line 516 leads to an error signal generation and display step. If adequate postage funds are available, line 524 leads to block 526 in which an indicia is created. These indicia include identifier data, which may be included as part of the indicia or printed adjacent to the indicia, or printed as another mark and either printed on the mailpiece, or label to be affixed to the article.

Line 528 leads to write log block 544. Write log block is a daily log of transfers of postage amounts and tracking numbers (identifier data). Line 548 leads to log file block 554, which is typically a memory or storage location.

Line 546 leads from write log block 544 to decision block 518, which determines if an indicia is received. If not, line 522 leads to line 524. If so, line 521 leads to block 520, which is render indicia page. Block 530 shows an example of an indicia page display. This page can be printed, as shown by block 532 or displayed on a computer display, such as a monitor or LCD display.

Line 534 leads to decision block 536, which determines whether the printing failed. If not, line 540 leads to write log block 542, where a successful printing is logged. If the printing failed, line 538 shows that an entry is made that the printing failed in write log 542. Block 543 permits printing a duplicate indicia. After a duplicate indicia is printed, decision block 518 is reached.

Line 550 leads from write log 542 to log file 554. This is done to maintain a daily log of printing successes and failures.

An embodiment has been described in terms of a method and apparatus for authorizing payment by a buyer to a seller upon delivery of an item. The apparatus includes various structural components, which include means for registering each one of a plurality of receiving parties with a transaction database. This means is, for example, a software program, operating on a buyer's computer by which the buyer can initiate an account at a remote computer, which identifies the buyer and authorizes the buyer to participate in an online auction or other network purchase. The buyer typically provides account information to which funds can be withdrawn upon delivery of the item or article purchased by the buyer.

The transaction database is typically a server, which is operated by a trusted third party that receives notification of delivery of the article and authorizes release of payment from another party holding the funds. Alternatively, the transaction database can be operated by a third party that actually holds the funds to be released and transfers the money upon receiving notification from a carrier that the article has been delivered to the destination address.

The apparatus also includes means for registering each one of a plurality of sending parties with the transaction database. This means is, for example, a software program, operating on a seller's computer by which the seller can initiate an account at a remote computer, which identifies the seller and authorizes the seller to participate in an online auction or other network sale. The seller typically provides account information to which funds can be deposited upon delivery of the item or article sold.

The apparatus also includes means for generating an identifier. This is an open system postage metering system to generate and print an indicia, or other label that includes identifying information that can be used to track and trace the location and delivery history of an article.

The apparatus also includes means for associating the identifier with a particular sending party and a particular item. This is for example, a location in memory or data base entry that correlates identifier data of a particular seller, or sending party and a particular item. This correlation facilitates identification of a seller, or sending party to a package or parcel or mailpiece such that when delivery of a package, parcel or mailpiece is made the sending party or seller's account can receive payment and the sending party or seller can be notified of the delivery and the transfer of funds.

The apparatus also includes means for storing data relating to the identifier and the particular sending party in the transaction database. This is, for example, a memory location or database entry that can store and retrieve the data.

The apparatus also includes means for transporting the item to a destination location specified by the receiving party. This means includes carrier services such as UPS (United Parcel Service) USPS (United States Postal Service), Fed Ex (Federal Express) DHL, Airborne Express and other carriers. The sending party or seller may utilize a multi-carrier selection software program to ascertain the most cost-effective carrier.

The apparatus also includes means for obtaining identifier data at the destination location. This is, for example, a scanner, PDA, wireless computer module, electronic tablet, laptop computer, scanner or other device that facilitates a determination of a parcel, package, item, mailpiece or article arrival at a destination location, which is typically specified, or agreed to, by the buyer or receiving party. For example, a delivery person can scan a bar code that includes identifier data and transmit that data to a remote database. The database can receive the signal and generate an indication that a particular article has been delivered to the destination address.

The apparatus also includes means for correlating the identifier data to a sending party. This means may be for example, a processor, or processing module or facility that is capable of matching identified data and sending party data. This may be accomplishes at the transaction server described herein or other processing location.

The apparatus also includes means for authorizing a debit from a selected receiving party's account. This is typically a processor, operating in conjunction with the transaction database that functions to decrement the buyer's, or receiving party's account in the amount of the cost of the item purchased.

## Claims

1. Apparatus for authorizing payment upon delivery of an item comprising:
means for registering each one of a plurality of receiving parties with a transaction database (124);
means for registering each one of a plurality of sending parties with the transaction database (124); and
means for authorizing a debit from a selected receiving party's account,
wherein the transaction database (124) is maintained by a third party, and wherein the means for authorising a debit operates in conjunction with the transaction database of the third party
**characterized by**:
an open system postage meter accessible by an information appliance of a sending party and operable to generate a postal indicia and an identifier with tracking capability for affixation to an item;
means for associating the identifier with the particular sending party and a particular item;
means for storing data relating to the identifier and the particular sending party in the transaction database (124);
means for obtaining identifier data at a destination location; and
means for correlating the identifier data for the delivered item to a sending party;
wherein the means for authorizing a debit is arranged to authorize the debit from the receiving party's account when the tracking status indicates delivery of the item to the receiving party.

2. The apparatus as claimed in Claim 1, further comprising means for notifying either the receiving party or the sending party that the debit has occurred.

3. The apparatus as claimed in Claim 1, further comprising means for selecting a particular carrier from a plurality of carriers for transporting the item.

4. The apparatus as claimed in Claim 1, wherein the open system postage meter is operable to generate an identifier comprising a bar code representation.

5. A method, performed by an apparatus according to claim 1, of authorizing payment upon delivery of an item, the method comprising:
registering each one of a plurality of receiving parties with a transaction database (204);
registering each one of a plurality of sending parties with the transaction database (204); and
authorizing a debit from a selected receiving party's account (230);
**characterised by**:
generating by an open system postage meter a postal indicia and an identifier with tracking capability for affixation by a sending party to an item (208);
associating the identifier with a particular sending party and a particular item (210);
storing data relating to the identifier and the particular sending party in the transaction database (210); obtaining identifier data at a destination location;
correlating the identifier data for the delivered item to a sending party;
wherein the debit from the receiving party's account is authorised when the tracking status indicates delivery of the item to the receiving party.

6. The method as claimed in Claim 5, further comprising notifying either the receiving party or the sending party that the debit has occurred.

7. The method as claimed in Claim 5, further comprising selecting a particular carrier from a plurality of carriers for transporting the item.

8. The method as claimed in Claim 5, wherein the identifier is generated as a bar code representation.

## Patentansprüche

1. Gerät zum Genehmigen einer Zahlung nach Zustellung einer Einheit, umfassend:
eine Einrichtung zum Registrieren jeder von einer Vielzahl von empfangenden Parteien in einer Transaktionsdatenbank (124);
eine Einrichtung zum Registrieren jeder von einer Vielzahl von sendenden Parteien in der Transaktionsdatenbank (124); und
eine Einrichtung zum Genehmigen einer Abbuchung von einem Konto einer gewählten empfangenden Partei,
wobei die Transaktionsdatenbank (124) von einer dritten Partei unterhalten wird und wobei die Einrichtung zum Genehmigen einer Abbuchung zusammen mit der Transaktionsdatenbank der dritten Partei operiert,
**gekennzeichnet durch**:
eine Offenes-System-Frankiermaschine, zugänglich **durch** eine Informationsvorrichtung einer sendenden Partei und betreibbar, einen Freimachungsvermerk und einen Identifizierer mit einer Verfolgungsfähigkeit zur Anbringung an eine Einheit zu erzeugen;
eine Einrichtung zum Assoziieren des Identifizierers mit der bestimmten sendenden Partei und einer bestimmten Einheit;
eine Einrichtung zum Speichern von Daten bezüglich des Identifizierers und der bestimmten sendenden Partei in der Transaktionsdatenbank (124);
eine Einrichtung zum Erhalten von Identifiziererdaten an einem Zielort; und
eine Einrichtung zum Korrelieren der Identifiziererdaten für die zugestellte Einheit mit einer sendenden Partei;
wobei die Einrichtung zum Genehmigen einer Abbuchung eingerichtet ist, die Abbuchung von dem Konto der empfangenden Partei zu genehmigen, wenn der Verfolgungsstatus eine Zustellung der Einheit an die empfangende Partei anzeigt.

2. Gerät nach Anspruch 1, ferner umfassend eine Einrichtung zum Melden entweder der empfangenden Partei oder der sendenden Partei, dass die Abbuchung stattgefunden hat.

3. Gerät nach Anspruch 1, ferner umfassend eine Einrichtung zum Wählen eines bestimmten Transporteurs aus einer Vielzahl von Transporteuren zum Transportieren der Einheit.

4. Gerät nach Anspruch 1, wobei die Offenes-System-Frankiermaschine betreibbar ist, einen Identifizierer zu erzeugen, der eine Strichcodedarstellung umfasst.

5. Verfahren, durchgeführt durch ein Gerät nach Anspruch 1, zum Genehmigen einer Zahlung nach Zustellung einer Einheit, wobei das Verfahren umfasst:
ein Registrieren jeder aus einer Vielzahl von empfangenden Parteien in einer Transaktionsdatenbank (204);
ein Registrieren jeder von einer Vielzahl von sendenden Parteien in der Transaktionsdatenbank (204); und
ein Genehmigen einer Abbuchung von einem Konto (230) einer gewählten empfangenden Partei;
wobei die Transaktionsdatenbank (124) von einer dritten Partei unterhalten wird und wobei die Einrichtung zum Genehmigen einer Abbuchung zusammen mit der Transaktionsdatenbank der dritten Partei operiert
**gekennzeichnet durch**:
ein Erzeugen **durch** eine Offenes-System-Frankiermaschine eines Freimachungsvermerks und eines Identifizierers mit Verfolgungsfähigkeit zur Anbringung **durch** eine sendende Partei an eine Einheit (208);
ein Assoziieren des Identifizierers mit einer bestimmten sendenden Partei und einer bestimmten Einheit (210);
ein Speichern von Daten bezüglich des Identifizierers und der bestimmten sendenden Partei in der Transaktionsdatenbank (210);
ein Erhalten von Identifiziererdaten an einem Zielort;
ein Korrelieren der Identifiziererdaten für die zugestellte Einheit mit einer sendenden Partei;
wobei die Abbuchung von dem Konto der empfangenden Partei genehmigt wird, wenn der Verfolgungsstatus die Zustellung der Einheit an die empfangende Partei anzeigt.

6. Verfahren nach Anspruch 5, ferner umfassend ein Melden von entweder der empfangenen Partei oder der sendenden Partei, dass die Abbuchung stattgefunden hat.

7. Verfahren nach Anspruch 5, ferner umfassend ein Wählen eines bestimmten Transporteurs aus einer Vielzahl von Transporteuren zum Transportieren der Einheit.

8. Verfahren nach Anspruch 5, wobei der Identifizierer als eine Strichcodedarstellung erzeugt wird.

## Revendications

1. Appareil destiné à autoriser le paiement à la livraison d'un article comprenant :
un moyen destiné à enregistrer chacun parmi plusieurs destinataires avec une base de données de transactions (124) ;
un moyen destiné à enregistrer chacun de plusieurs expéditeurs avec la base de données de transactions (124) ; et
un moyen destiné à autoriser le débit du compte d'un destinataire sélectionné,
où la base de données de transactions (124) est maintenue par un tiers, et où le moyen destiné à autoriser le débit fonctionne conjointement avec la base de données de transactions du tiers ;
**caractérisé par** :
une machine à affranchir à système ouvert accessible à un appareil d'informations d'un expéditeur et fonctionnant pour générer des marques postales et un identifiant, avec la possibilité d'en faire le suivi, à apposer sur un article ;
un moyen destiné à associer l'identifiant à un expéditeur et à un article particulier ;
un moyen destiné à stocker des données se rapportant à l'identifiant et à l'expéditeur particulier dans la base de données de transactions (124) ;
un moyen destiné à obtenir des données de l'identifiant à un emplacement de destination ; et
un moyen destiné à corréler les données de l'identifiant pour l'article livré à un expéditeur ;
où le moyen destiné à autoriser un débit est agencé pour autoriser le débit du compte du destinataire lorsque l'état de suivi indique la livraison de l'article au destinateur.

2. Appareil tel que revendiqué dans la revendication 1, comprenant en outre un moyen destiné à informer soit le destinataire, soit l'expéditeur que le débit a été effectué.

3. Appareil tel que revendiqué dans la revendication 1, comprenant en outre un moyen destiné à sélectionner un vecteur particulier parmi une pluralité de vecteurs pour transporter l'article.

4. Appareil tel que revendiqué dans la revendication 1, dans lequel la machine à affranchir à système ouvert fonctionne pour générer un identifiant comprenant une représentation par code à barres.

5. Procédé, effectué par un appareil selon la revendication 1, qui consiste à autoriser un paiement à la livraison d'un article, le procédé comprenant le fait :
d'enregistrer chacun parmi plusieurs destinataires avec une base de données de transactions (204) ;
d'enregistrer chacun parmi plusieurs expéditeurs avec la base de données de transactions (204) ; et
d'autoriser le débit d'un compte d'un destinataire sélectionné (230) ;
où la base de données de transactions (124) est maintenue par un tiers, et où le moyen destiné à autoriser un débit fonctionne conjointement avec la base de données de transactions du tiers ;
**caractérisé par** le fait
de générer par une machine à affranchir à système ouvert des marques postales et un identifiant, à apposer par un expéditeur sur un article (208), avec la possibilité d'en faire le suivi ;
d'associer l'identifiant à un expéditeur particulier et à un article particulier (210) ;
de stocker des données relatives à l'identifiant et à l'expéditeur particulier dans la base de données de transactions (210) ;
d'obtenir des données de l'identifiant à un emplacement de destination ;
de corréler les données de l'identifiant pour l'article livré à un expéditeur ;
où le débit du compte du destinataire est autorisé lorsque l'état de suivi indique la livraison de l'article au destinataire.

6. Procédé tel que revendiqué dans la revendication 5, comprenant en outre le fait d'informer soit le destinataire, soit l'expéditeur que le débit a eu lieu.

7. Procédé tel que revendiqué dans la revendication 5, comprenant en outre le fait de sélectionner un vecteur particulier parmi une pluralité de vecteurs pour transporter l'article.

8. Procédé tel que revendiqué dans la revendication 5, dans lequel l'identifiant est généré sous forme de représentation par code à barres.
